# EUROPEAN PATENT APPLICATION

(11) **EP 4 549 918 A1**
(43) Date of publication of application: **07.05.2025**
(21) Application number: 23830831.6
(22) Date of filing: 08.05.2023
(51) Int. Cl.: G01N 21/84, C25D 21/12, G01N 21/95

(54) **IMAGE COMPARISON SYSTEM, IMAGE COMPARISON METHOD, AND IMAGE COMPARISON PROGRAM**

(30) Priority: 30.06.2022 JP 2022105736
(71) Applicant: Yamamoto-ms Co., Ltd., Tokyo 151-0051 (JP)
(72) Inventor: YAMAMOTO, Wataru, Tokyo 151-0051 (JP); KOIWA, Kimiko, Tokyo 151-0051 (JP)
(74) Representative: Dehns
(86) International application number: PCT/JP2023/017297
(87) International publication number: WO 2024/004379

(57) **Abstract**

An image comparison system (300) comprises: an acquisition unit (111) that acquires a surface state image of a metal piece that shows the result of a plating test; a condition acquisition unit (113) that acquires test conditions for the plating test with respect to a newly acquired surface state image; a storage unit (120) that stores surface state images and test conditions; an extraction unit (114) that extracts, from the storage unit (120), another surface state image for which at least some of the test conditions match the test conditions of the newly acquired surface state image; and a display control unit (115) that causes the newly acquired surface state image and the other surface state image extracted by the extraction unit (114) to be displayed on a display unit (160) in a comparable manner.

## Description

### TECHNICAL FIELD

The present invention relates to an image comparison system, an image comparison method, and an image comparison program.

### BACKGROUND ART

Conventionally, the Hull cell test has been performed as a test for plating. The Hull cell test is widely used internationally as a basic test for process management in electroplating.

There are a wide variety of factors that affect the coating condition in the plating process, and these factors are often unexpected. The Hull cell test is beneficial because it can quickly identify the causes of appearance changes that cannot be compensated for by chemical analysis.

However, in the Hull cell test, an operator visually checks and judges the metal coating formed by electrodeposition. Therefore, the Hull cell test is partially dependent on the human ability of the operator. In particular, there is a decrease in the number of engineers, and there are concerns about a shortage of engineers in terms of technology transfer and the utilization of technology for the future.

Here, for example, a surface inspection device is disclosed in Patent Literature 1 as a technique related to the Hull cell test. The abstract of the surface inspection device of Patent Literature 1 states, "A surface inspection device 10 for inspecting defects on a surface of an inspection target object includes: an illumination device 20 having a planar light emission region 20a, and for emitting diffused light to the surface of the inspection target object 50 from the planar light emission region 20a; an imaging device 30 for generating a taken image by taking an image of the surface of the inspection target object 50 illuminated by the illumination device 20; and a determination unit 40 for determining whether or not there is a defect on the surface of the inspection target object 50 on the basis of the taken image. The illumination device 20 is arranged so that a regular reflection direction in the surface of the inspection target object 50 in an optical axis of the imaging device 30 agrees with a normal line of the light emission region in the center of the light emission region."

### CITATION LIST

### Patent Literature

Patent Literature 1: JP 2021-179331 A

### SUMMARY OF INVENTION

### Technical Problem

The surface inspection device described in Patent Literature 1 uses a steel plate subjected to electroplating treatment on its surface as an inspection object, enabling appropriate detection of stain defects that have occurred on the surface of the inspection object having a relatively large surface roughness. In particular, in the surface inspection device of Patent Literature 1, since the light emitting region of the illumination device is planar, the formation of bright and dark portions is suppressed even if the surface of the inspection object is uneven.

However, even when the surface inspection device described in Patent Literature 1 is used, it is necessary for the operator to visually check the test results on the surface to be inspected and to determine the test results based on the captured images of the inspection object.

Therefore, even if stain defects can be detected by the surface inspection device described in Patent Literature 1, there is no point in detecting the stain defects if the operator cannot determine whether the test results are acceptable or unacceptable. In particular, from the viewpoint of technology transfer and the utilization of technology for the future, operators are unable to utilize the technology accumulated by skilled workers to judge test results.

Therefore, the present invention has been made in view of the above problems, and an object thereof is to provide information that can be used as a judgment material for the test results of a plating test.

### Solution to Problem

That is, an object of the present invention is achieved by the following configuration.

An image comparison system according to the present invention includes: an acquisition module that acquires a surface state image of a metal piece indicating a result of a plating test; a condition acquisition module that acquires a test condition of the plating test for the surface state image that has been newly acquired; a storage module that stores the surface state image and the test condition; an extraction module that extracts from the storage module an other surface state image whose test conditions match at least partially with test conditions of the newly acquired surface state image; and a display control module that causes a display module to comparatively display the newly acquired surface state image and the other surface state image extracted by the extraction module.

### Advantageous Effects of Invention

According to the present invention, it is possible to easily provide information that can be used as a judgment material for the test results of a plating test.

### BRIEF DESCRIPTION OF DRAWINGS

FIG. 1A is an explanatory diagram showing a configuration of a Hull cell test.
FIG. 1B is an explanatory diagram showing a Hull cell tank.
FIG. 2 is an explanatory diagram showing an overall configuration of an image comparison system according to the present embodiment.
FIG. 3 is an explanatory diagram showing a configuration of main hardware of the image comparison system according to the present embodiment.
FIG. 4 is a functional block diagram showing functions of a CPU of an information processing device according to the present embodiment.
FIG. 5A is a flowchart showing an operation of the image comparison system according to the present embodiment (Part 1).
FIG. 5B is a flowchart showing the operation of the image comparison system according to the present embodiment (Part 2).
FIG. 5C is a flowchart showing the operation of the image comparison system according to the present embodiment (Part 3).
FIG. 6 is an explanatory diagram showing a display screen of a Hull cell test image comparison system.
FIG. 7 is an explanatory diagram showing a screen showing a cover page.
FIG. 8 is a display screen showing a surface state image of a metal piece to be imaged.
FIG. 9 is an input screen for inputting test conditions for the surface state image of the metal piece.
FIG. 10A is an explanatory diagram showing the upper half of input items on the input screen.
FIG. 10B is an explanatory diagram showing the lower half of input items on the input screen.
FIG. 11 is a display screen showing priority items when performing data comparison of surface state images.
FIG. 12 is a display screen in which other surface state images are extracted on the right side in order from newest to oldest date.
FIG. 13 is a display screen in which other surface state images corresponding to five regions are extracted.
FIG. 14 is a display screen in which a visible light image displayed in a region and a visible light image displayed in a region are compared.
FIG. 15 is a display screen showing a superimposed display in which a visible light image and a visible light image are overlaid.
FIG. 16 is a display screen showing a graph indicating the degree of surface unevenness in a polarization image.
FIG. 17 is a display screen in which past data is called and the presence or absence of other surface state images is displayed on a calendar.
FIG. 18A defines terms for surface roughness when nickel is used.
FIG. 18B defines terms for color and gloss when nickel is used.

### DESCRIPTION OF EMBODIMENTS

Hereinafter, embodiments for carrying out the present invention will be described in detail.

### <Outline of Present Embodiment>

An image comparison system according to the present embodiment captures a surface state of a metal piece subjected to a plating test by electroplating to acquire a surface state image of the metal piece. An operator observes the acquired surface state image and determines the state of the surface. As an example of the plating test, the Hull cell test is applied, and the precipitation state at a continuous current density in the metal piece is targeted. The image comparison system according to the present embodiment is not limited to the Hull cell test of the plating test, and can be applied to, for example, a uniformity test, an adhesion test, or the like, in which an operator performs visual determination.

### [Hull Cell Test]

First, the Hull cell test will be described. The Hull cell test is a test method in which the state of a plating bath is observed by performing plating treatment on a cathode (test piece) in a Hull cell tank using a small amount of plating solution. For example, copper, nickel, zinc, or the like can be applied to the plating solution.

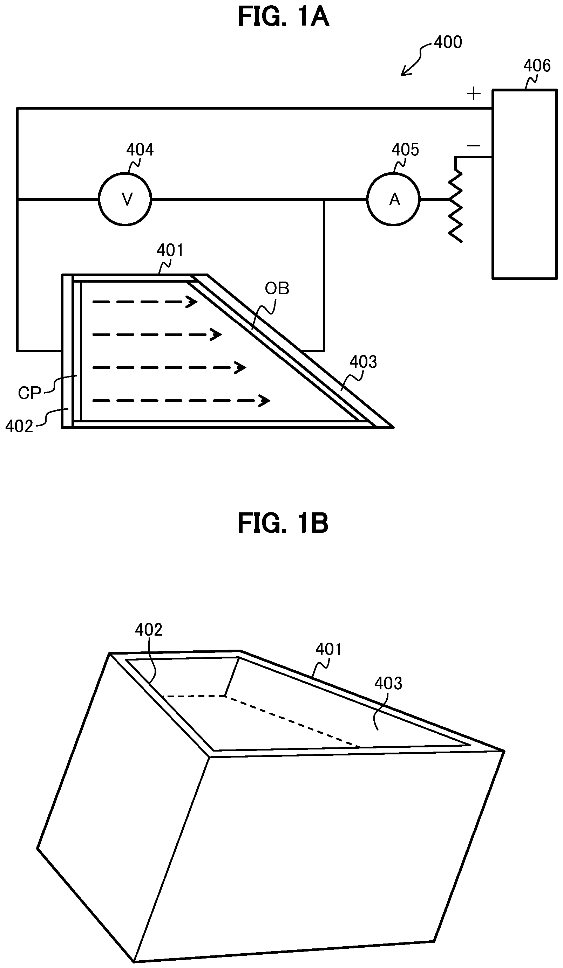

FIG. 1A is an explanatory diagram showing a configuration of the Hull cell test. A Hull cell test 400 (plating apparatus) includes a Hull cell tank 401, an anode plate CP provided on a left side wall 402 of the Hull cell tank 401, a cathode plate (metal piece OB as a test piece) provided on a right side wall 403 of the Hull cell tank 401, a voltmeter 404, an ammeter 405, and a power supply device (constant current module) 406.

In the Hull cell test 400 of the present embodiment, plating treatment is performed on the metal piece OB using the Hull cell tank 401, the power supply device 406, the anode plate CP, and the cathode plate (metal piece OB) to observe a surface state of the metal piece OB after plating (state of plating deposited on the surface of the cathode plate). For example, oxygen-free copper, electrolytic nickel, or the like can be used for the anode plate CP, and iron, brass, or the like can be used for the cathode plate (metal piece OB). The Hull cell test 400 is performed using a water tank called a Hull cell tank 401 in order to easily observe the bath state in a short time using a small amount of plating solution.

FIG. 1B is an explanatory diagram showing the Hull cell tank. The Hull cell tank 401 has a trapezoidal shape, and has a structure in which the right side wall 403 is disposed obliquely with respect to the left side wall 402. The Hull cell tank 401 changes the distance between the electrodes of the anode plate CP and the cathode plate (metal piece OB) by disposing the right side wall 403 obliquely, thereby giving a gradient to the current distribution state.

Therefore, in the Hull cell test 400, the current density is higher as the distance between the electrodes of the side wall 402 and the side wall 403 is closer to the upper side of the trapezoid on the cathode plate (metal piece OB) of the Hull cell tank 401, and the current density is lower as the distance between the electrodes of the side wall 402 and the side wall 403 is farther from the lower side of the trapezoid. As described above, in the Hull cell test 400, since a plating film in a wide current density range can be obtained on the metal piece OB constituting the cathode plate, it is possible to observe a wide current density region at one time.

### <Overall Configuration of Image Comparison System>

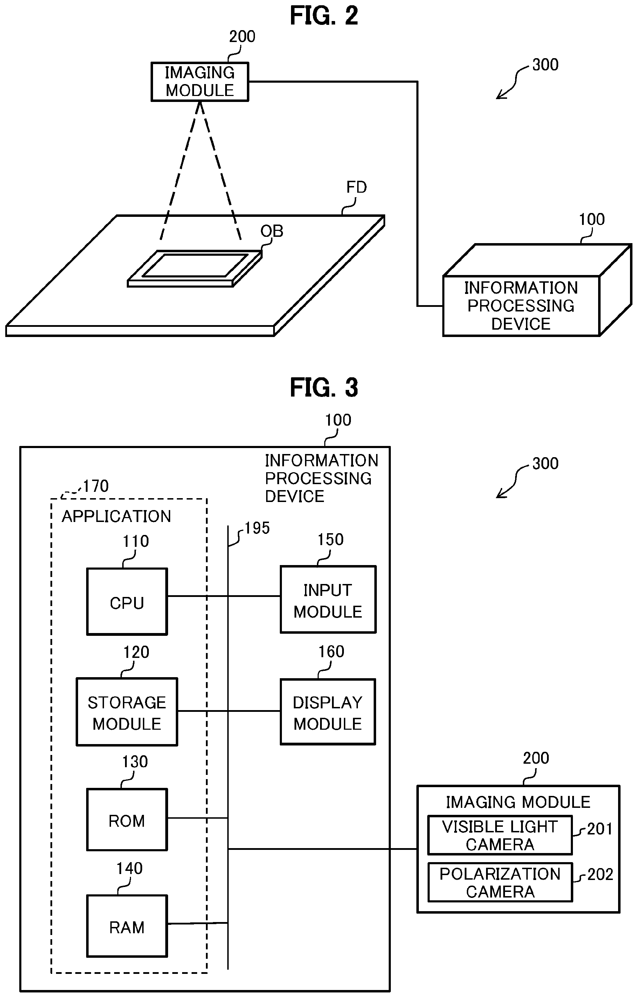

FIG. 2 is an explanatory diagram showing an overall configuration of an image comparison system according to the present embodiment. As shown in FIG. 2, an image comparison system 300 according to the present embodiment includes an information processing device 100 and an imaging module 200.

When an operator performs a plating test on the metal piece OB constituting the cathode plate, a result of the plating test is formed on the surface of the metal piece OB. The metal piece OB is placed on a base FD, and an operator photographs the metal piece OB placed on the base FD using the imaging module 200.

In the present embodiment, imaging refers to the imaging module 200 photographing the surface of the metal piece OB to generate a surface state image of the metal piece OB. The plating test in the present embodiment is a Hull cell test, in which a current that continuously changes within a predetermined range of current density is passed through a metal piece OB provided in a plating bath to precipitate plating, and the result is imaged.

The information processing device 100 acquires a plurality of surface state images captured by the imaging module 200, and links test conditions and on-site observations to the surface state image of the metal piece OB by software (application). As a result, the information processing device 100 can predict the current bath state of the metal piece OB, possible plating defects in the future, and the like.

### <Details of Present Embodiment>

### [Hardware Configuration of Image Comparison System]

FIG. 3 is an explanatory diagram showing a configuration of main hardware of the image comparison system according to the present embodiment.

The information processing device 100 includes a CPU (Central Processing Unit) 110, a storage module 120, a ROM (Read Only Memory) 130, a RAM (Random Access Memory) 140, an input module 150, a display module 160, and an internal bus 195. The information processing device 100 is, for example, a laptop computer, a personal computer, or a tablet terminal, and is not particularly limited.

The CPU 110, the storage module 120, the ROM 130, and the RAM 140 function as an application 170 when the CPU 110 executes a control program (not shown) stored in the storage module 120 or the ROM 130.

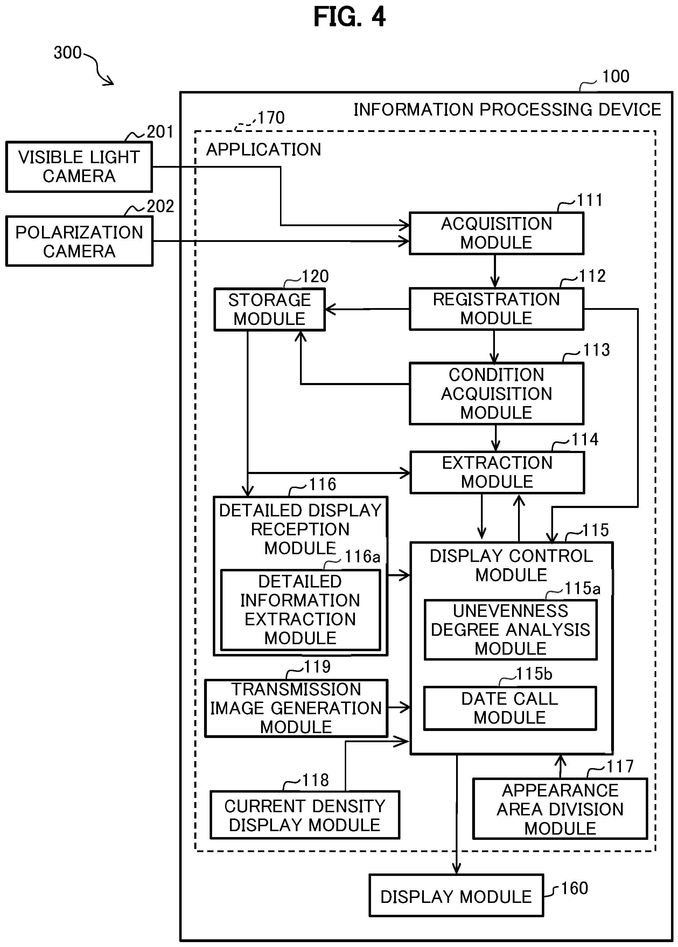

The CPU 110 is a central processing unit, and implements each process shown in FIG. 4 by executing the control program stored in the storage module 120 or the ROM 130.

The storage module 120 is a large-capacity storage device, and is, for example, a non-volatile memory (so-called flash memory), a hard disk drive, or the like. The storage module 120 stores, for example, a control program, a surface state image of the metal piece OB, test conditions of the Hull cell test, and the like.

The RAM 140 functions as a work area for temporarily storing various programs, input data, output data, and parameters that are executable by the CPU 110 by reading the control program from the ROM 130 in various processes execution-controlled by the CPU 110.

The input module 150 includes an input device including cursor keys, numeric input keys, various function keys, and the like. The input module 150 outputs a pressing signal and an operation signal of a pressed key to the CPU 110 as an input signal. The CPU 110 executes various processes based on the pressing signal and the operation signal from the input module 150.

The display module 160 is, for example, an LCD (Liquid Crystal Display) monitor. The display module 160 displays the surface state image of the metal piece OB according to an instruction of a display signal input from the CPU 110. The display module 160 and the input module 150 may employ a touch panel display.

The internal bus 195 electrically connects each component in the information processing device 100 to each other.

The imaging module 200 includes a visible light camera 201 that captures an image with visible light and a polarization camera 202 that captures an image with predetermined polarized light. The visible light camera 201 and the polarization camera 202 each capture the surface state of the metal piece OB to acquire a new surface state image.

The visible light camera 201 generates a visible light image, so that an operator can determine, for example: the color tone of the coating; and the darkening when the metal piece OB is scorched. The visible light image includes an optical image and a digital image.

The polarization camera 202 images polarization information obtained by transmitting light having a predetermined polarization direction by each polarizer having the predetermined polarization direction. The polarization camera 202 generates a polarization image, so that an operator can determine surface irregularities (about 0.1 mm) such as burning/scorching, blistering (swelling), and pitting (macroscopic holes). The captured image captured by the imaging module 200 includes a visible light image and a polarization image.

### [Configuration of Functional Block of Information Processing Device]

Next, processing of the CPU 110 of the information processing device 100 according to the present embodiment will be described with reference to FIG. 4. Hereinafter, the same members are denoted by the same reference numerals, and description thereof will be omitted as appropriate.

FIG. 4 is a functional block diagram showing functions of the CPU 110 of the information processing device 100 according to the present embodiment. The CPU 110 implements an acquisition module 111, a registration module 112, a condition acquisition module 113, an extraction module 114, a display control module 115, a detailed display reception module 116, and the like by executing the control program stored in the storage module 120.

The display control module 115 includes an unevenness degree analysis module 115a and a date call module 115b. The detailed display reception module 116 includes a detailed information extraction module 116a.

The CPU 110 also implements an appearance area division module 117, a current density display module 118, and a transmission image generation module 119 by executing the control program stored in the storage module 120.

The acquisition module 111 acquires the surface state image of the metal piece OB indicating the result of the plating test from the imaging module 200. The acquisition module 111 acquires a visible light image from the visible light camera 201 and acquires a polarization image from the polarization camera 202.

The registration module 112 stores the surface state image of the metal piece OB acquired by the acquisition module 111 in the storage module 120.

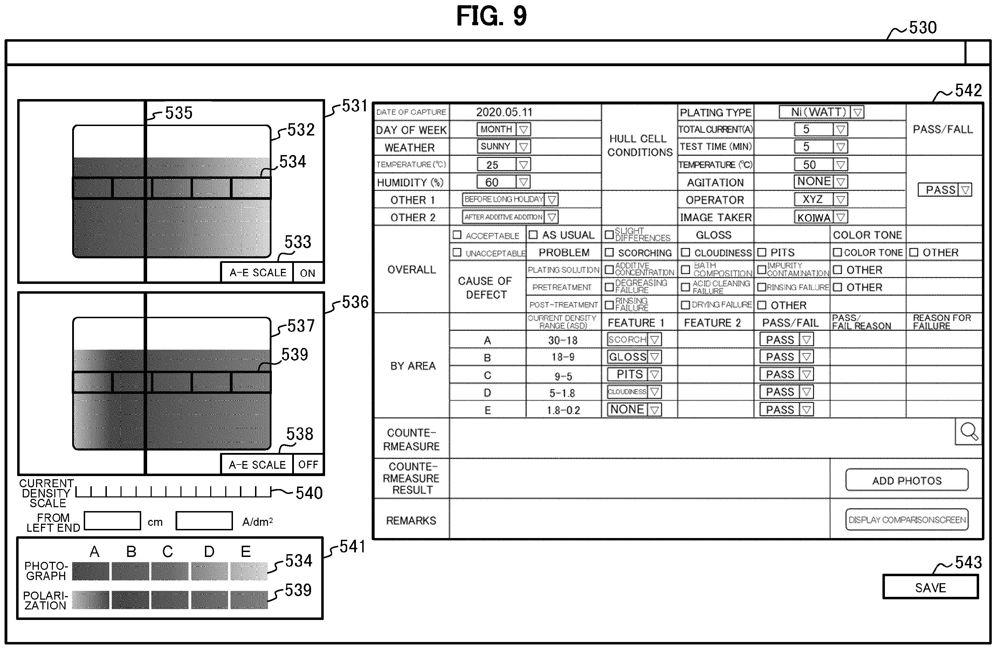

The condition acquisition module 113 acquires test conditions of the plating test for the newly acquired surface state image. The condition acquisition module 113 causes the display module 160 to display an input screen of test conditions, such as one shown in FIG. 9, which will be described later. The condition acquisition module 113 stores the test conditions inputted from the input module 150 in the storage module 120 in association with the newly acquired surface state image.

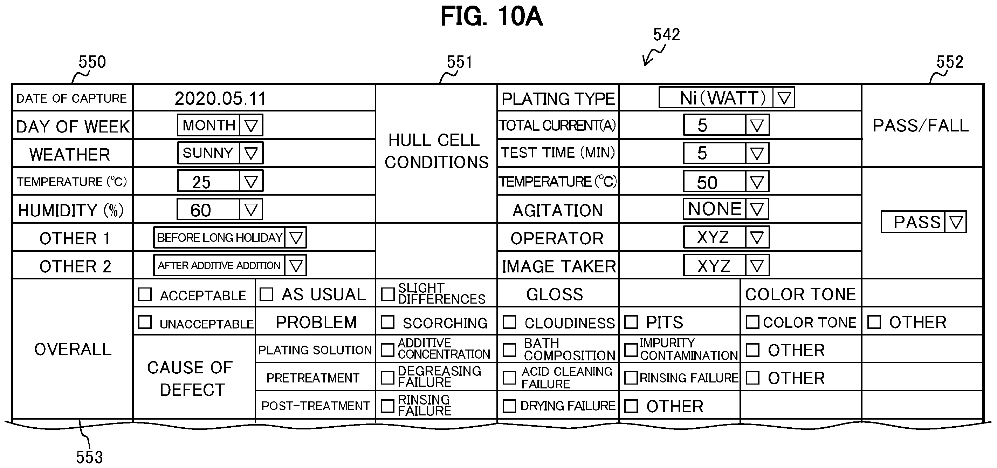

The extraction module 114 refers to the test conditions of the newly acquired surface state image, and extracts from the storage module 120 an other surface state image in which the test conditions of the surface state image stored in advance in the storage module 120 match at least partially with the test conditions of the newly acquired surface state image. The extraction module 114 extracts from the storage module 120, for example, an other surface state image whose test conditions match at least partially with the Hull cell condition 551 of FIG. 10A, which will be described later, namely the type of plating, total current ([A]), test time ([min]), temperature ([°C]), agitation, operator, and image taker. For example, the Hull cell condition 551 is such that the type of plating is nickel (Ni), the total current is 5 [A], the test time is 5 minutes, the temperature of the plating solution is 50°C, and agitation is not performed.

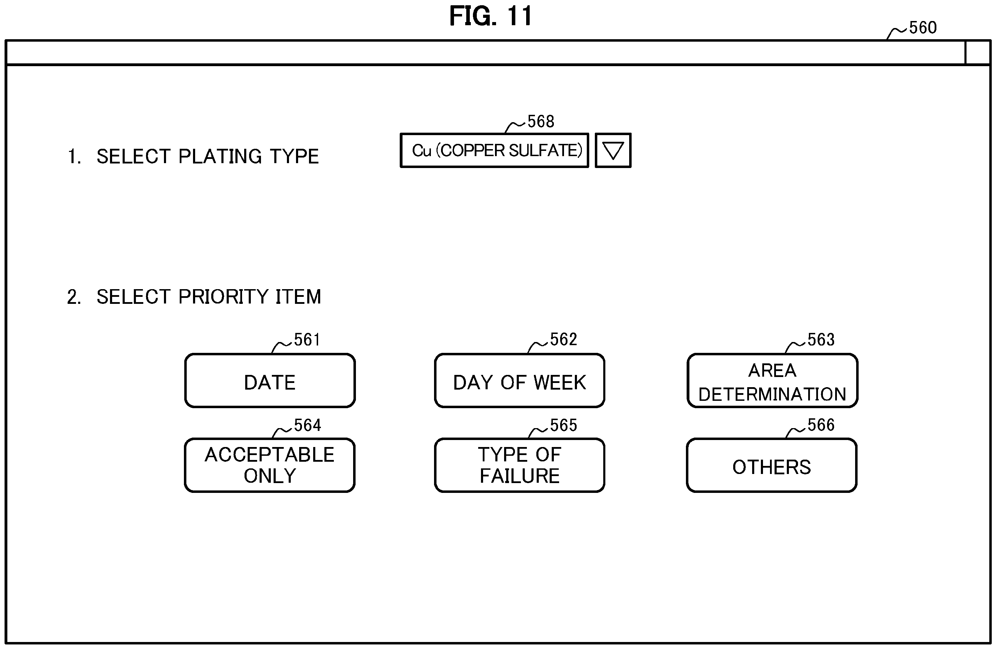

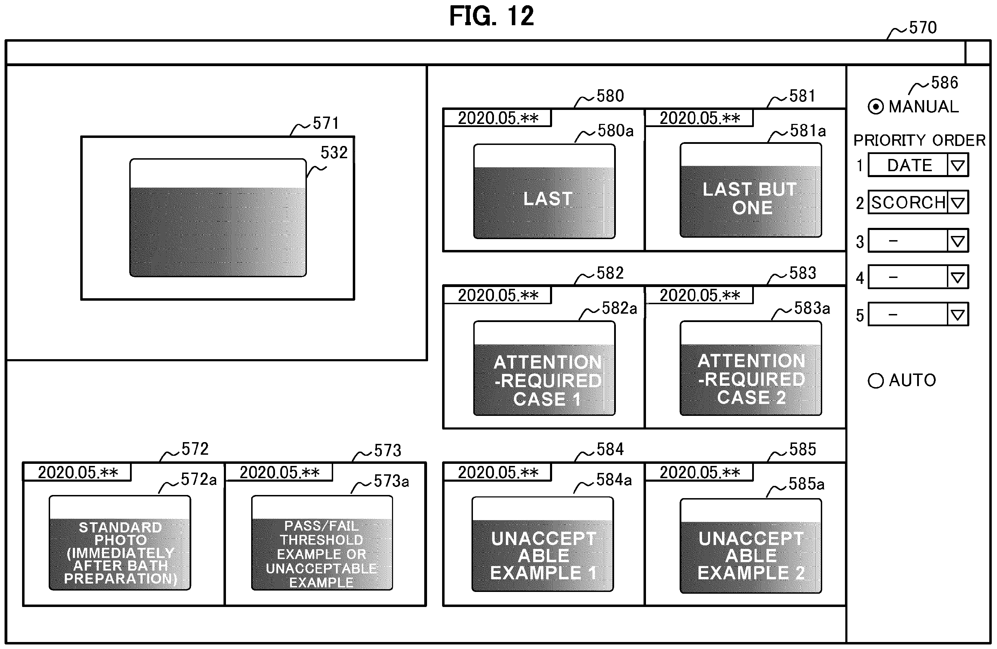

The extraction module 114 has a plurality of criterion items different from the test conditions, accepts selection of one item from the plurality of items, and can preferentially extract a corresponding other surface state image. The extraction module 114 receives, for example, one priority item from among the priority items in FIG. 11, which will be described later, extracts other surface state images, and as shown in FIG. 12, the display control module 115 can display the extracted other surface state images.

The display control module 115 causes the display module 160 to comparatively display the newly acquired surface state image and the other surface state image extracted by the extraction module 114. Further, the display control module 115 can cause the display module 160 to display the visible light image captured by the visible light camera 201 and/or the polarization image captured by the polarization camera 202, each of which is the new surface state image. In this case, when either the visible light image or the polarization image, each of which is the new surface state image, is selected, the display control module 115 causes the display module 160 to display the corresponding one of the visible light image and the polarization image, which are the other surface state images.

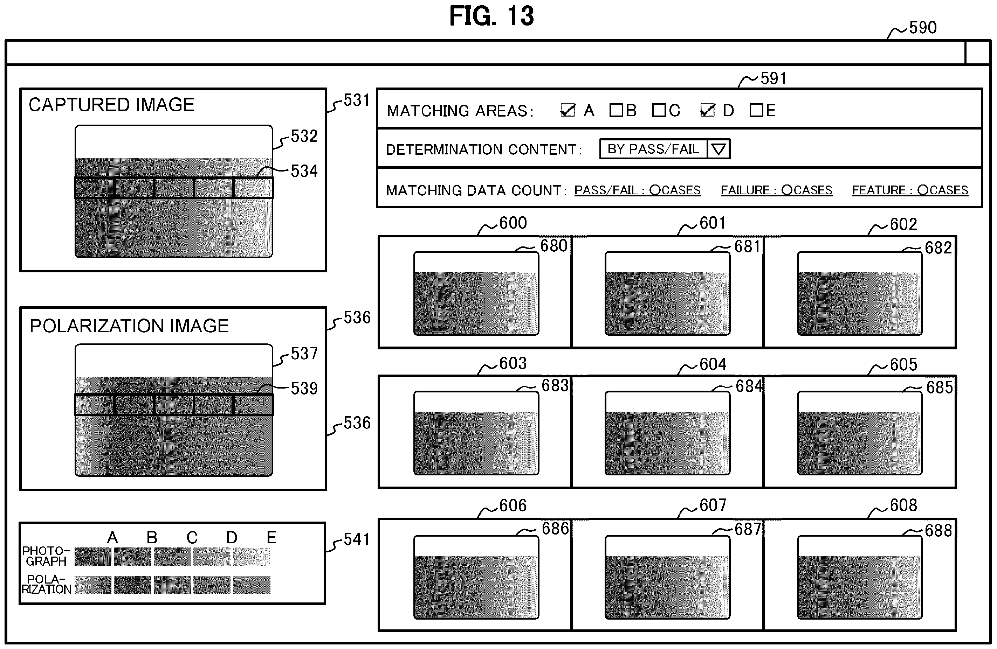

For example, as in FIG. 13, which will be described later, the display control module 115 causes the display screen 590 to display the visible light image 532 and the polarization image 537, which are the new surface state images. In this case, the display control module 115 can comparatively display the visible light image or the polarization image, which is the other surface state image extracted by the extraction module 114.

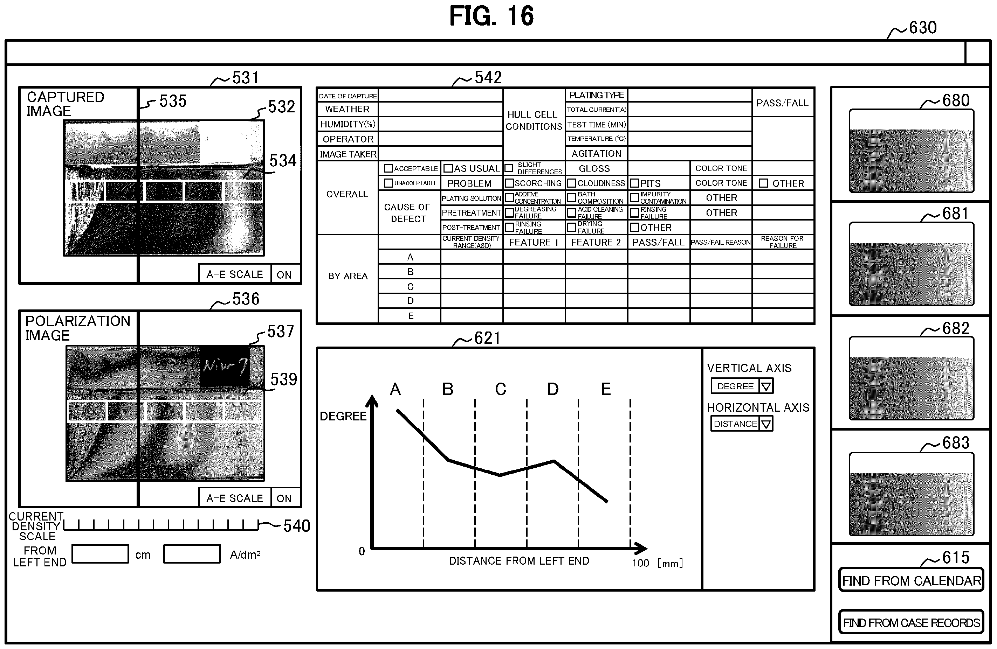

The unevenness degree analysis module 115a analyzes the degree of unevenness on the surface of the metal piece OB based on the distance from the end of the polarization image or the end of the metal piece and displays the degree of unevenness on the display module 160. The unevenness degree analysis module 115a analyzes the degree of unevenness on the surface of the polarization image 537, for example, as in the graph 621 of FIG. 16, which will be described later.

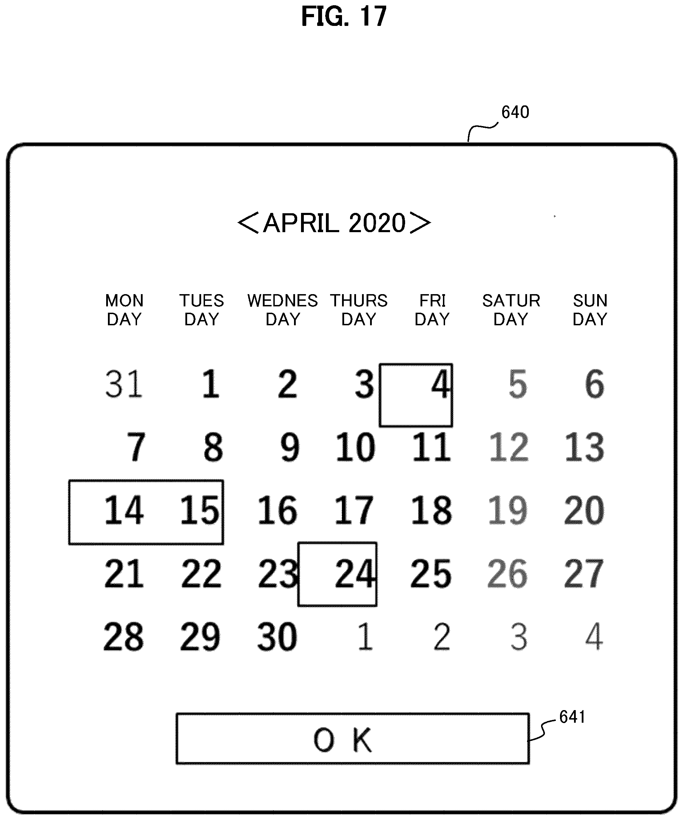

The date call module 115b, in conjunction with the extraction module 114, displays on a calendar the presence or absence of other surface state images based on the imaging date extracted by the extraction module 114. For example, the extraction module 114 extracts an other surface state image whose test conditions match at least partially with the test conditions of the newly acquired surface state image, based on the imaging date on which the other surface state image is captured. For example, as in FIG. 17, which will be described later, the date call module 115b displays the presence or absence of other surface state images based on the imaging date extracted by the extraction module 114 on the calendar 640 of the display module 160. Thus, when the date is selected on which the other surface state image displayed on the calendar is present, the date call module 115b can cause the display module 160 to display the other surface state image captured on the selected date.

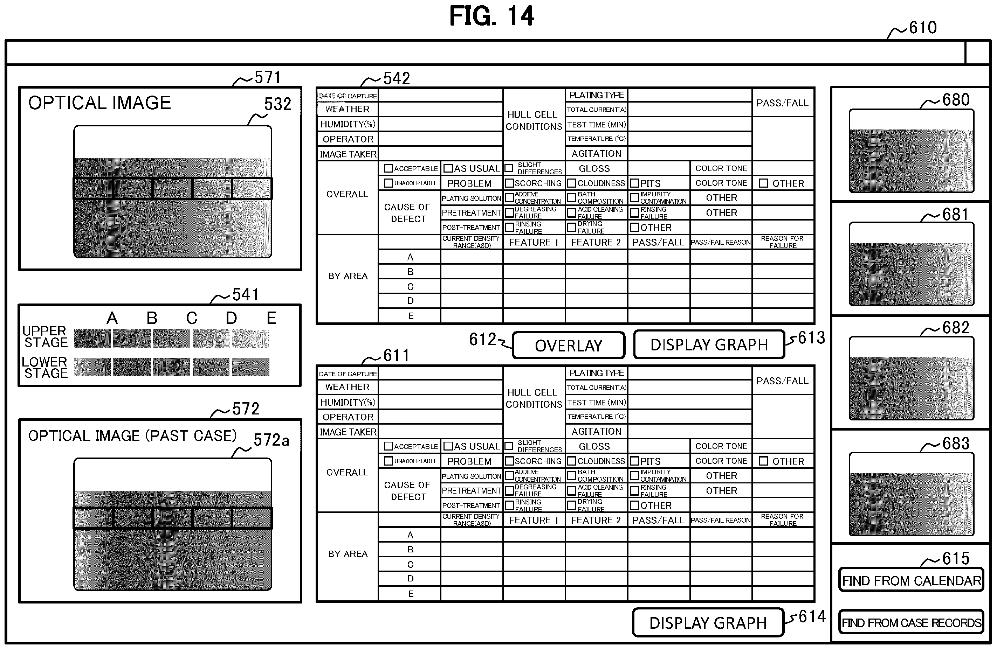

When the extraction module 114 extracts a plurality of other surface state images, the detailed display reception module 116 receives a detailed display instruction for the state of any one of the plurality of other surface state images extracted by the extraction module 114. For example, as in FIG. 12, which will be described later, when a plurality of other surface state images 580a to 585a are extracted by the extraction module 114, the detailed display reception module 116 receives a detailed display instruction for an other surface state image that an operator wants to compare with the newly acquired surface state image by selection of the operator. In this case, as shown in FIG. 14, which will be described later, the display control module 115 can comparatively display the newly acquired surface state image and the selected other surface state image on the display module 160.

The detailed information extraction module 116a extracts detailed information from the storage module 120 for each of the other surface state images and the newly acquired surface state image. Detailed information including at least one of the surface state of the metal piece OB, the test conditions, the countermeasure method, the countermeasure result, and the remarks entry is associated with each of the other surface state images and the newly acquired surface state image in the storage module 120. The display control module 115 can comparatively display, for example, as shown in FIG. 14, the input screen 542 of the visible light image 532 (detailed information of the newly acquired surface state image) extracted by the detailed information extraction module 116a and the input screen 611 of the visible light image 572a (detailed information of the other surface state images).

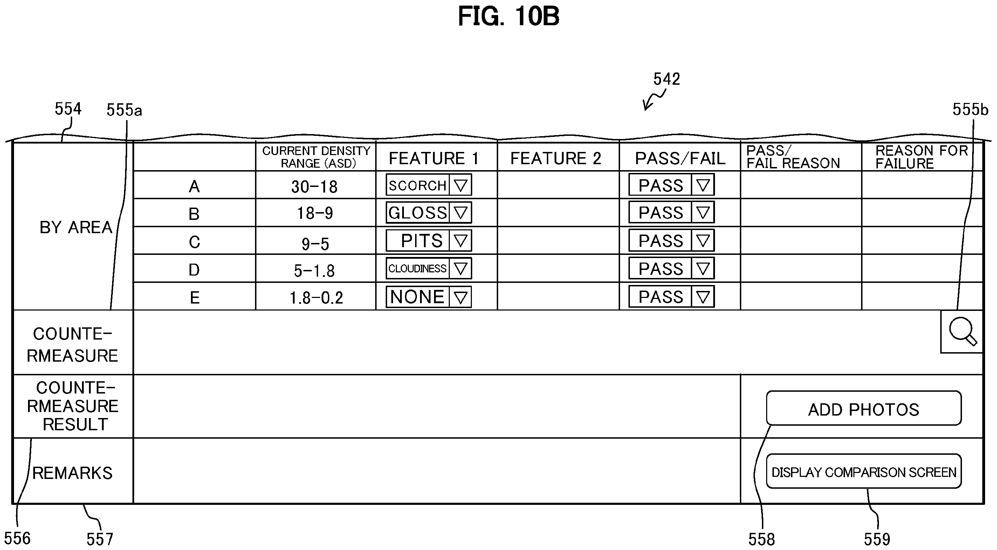

The appearance area division module 117 divides the surface of the metal piece OB into a plurality of areas. The appearance area division module 117 accepts a determination of whether or not the test result is acceptable in each of the plurality of divided areas. Therefore, the operator inputs a determination of whether or not the test result is acceptable for each divided area. The appearance area division module 117 divides the surface of the metal piece OB into five areas, such as areas 534 and 539 in FIG. 9, which will be described later. The operator can determine pass/fail for each of the five areas, as in the area-specific item 554 on the input screen 542 in FIG. 10B.

The current density display module 118 acquires position information from the end of the image or the end of the metal piece OB in the image in the newly acquired surface state image or the other surface state image, and displays the current density at the acquired position information on the display module 160. For example, as shown in the scale 540 in FIG. 9, when the position of the line 535 is designated on the surface state image, the current density display module 118 displays the current density at that position. The current density is calculated by, for example, a relational expression of a one-dimensional current distribution model of a Hull cell tank, a Hull cell quick reference table, or the like.

The display control module 115 can superimpose and display any one of the other surface state image extracted by the extraction module 114 and the newly acquired surface state image. In this case, the display control module 115 may superimpose a part of the other surface state image and the newly acquired surface state image.

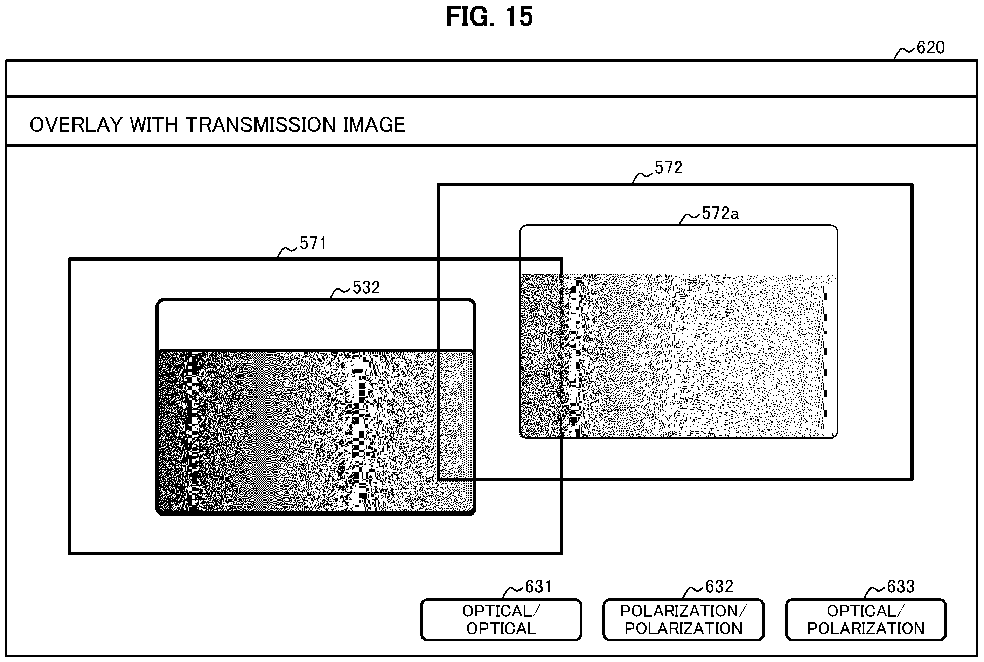

The transmission image generation module 119 transmits an image of either one of the other surface state image and the newly acquired surface state image. As a result, the display control module 115 can superimpose and display the transmitted one captured image and the other captured image. For example, as shown in FIG. 15, which will be described later, the display control module 115 can change either the visible light image 532 displayed in the region 571 or the visible light image 572a displayed in the region 572 to a transmission image, and superimpose and display the image in a translucent state.

### <Operation of Image Comparison System>

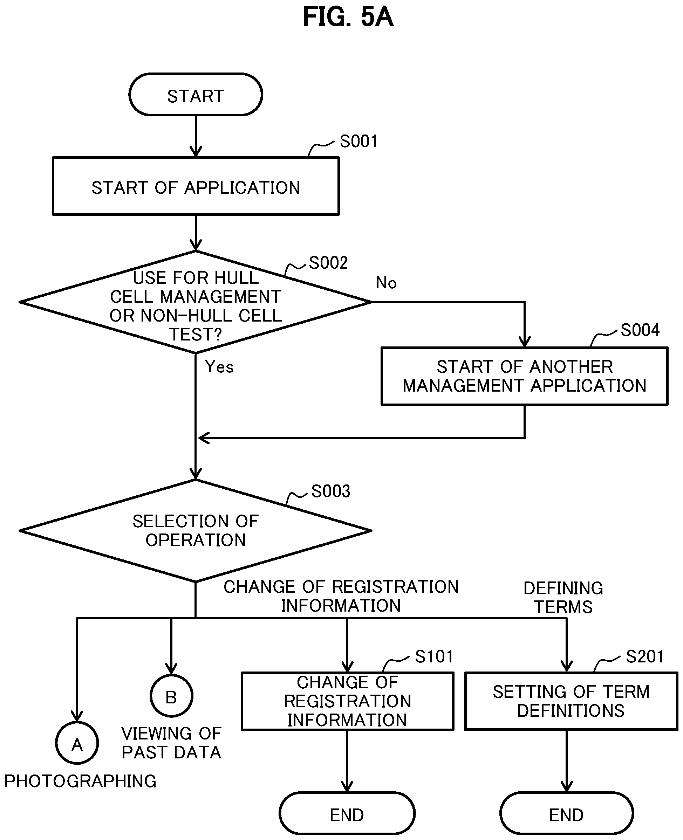

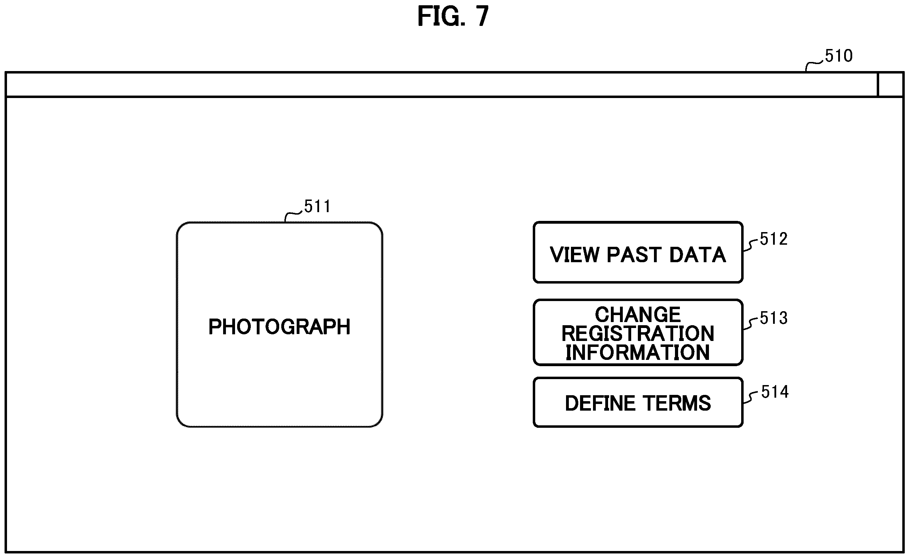

FIGS. 5A to 5C are flowcharts showing an operation of the image comparison system according to the present embodiment. The operation of the image comparison system according to the present embodiment will be described with reference to FIGS. 2 to 4 and the display screens of FIGS. 7 to 18B as appropriate.

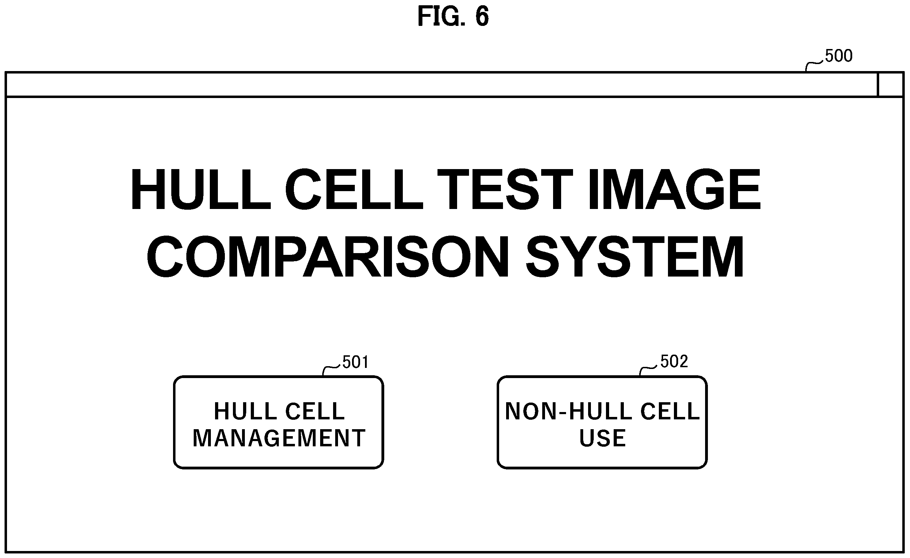

When the application 170 is executed, the information processing device 100 of the image comparison system 300 starts the Hull cell test image comparison system (Step S001 in FIG. 5A, FIG. 6).

FIG. 6 is an explanatory diagram showing a display screen of the Hull cell test image comparison system. As shown in FIG. 6, selection buttons 501 and 502 are displayed on the display screen 500 of the image comparison system 300. The selection button 501 is a selection button for performing image comparison for Hull cell management, and the selection button 502 is a selection button for performing image comparison for use other than the Hull cell.

When the operator uses the system for Hull cell management (Yes in Step S002), by selecting the selection button 501 by the input module 150, the display module 160 displays a screen 510 showing a cover page (Step S003, FIG. 7).

On the other hand, when used for other than the Hull cell test (No in Step S002), the operator selects the selection button 502 by the input module 150 to start an other management application (Step S004). The image comparison system 300 proceeds to Step S003 in conjunction with the other management application that has been started.

FIG. 7 is an explanatory diagram showing a screen showing a cover page. As shown in FIG. 7, four operation buttons 511 to 514 are displayed on the screen 510 (Step S003).

The operation button 511 is a button for executing photographing. The operation button 512 is a button for viewing past data. The operation button 513 is a button for changing registration information. The operation button 514 is a button for referring to the definition of terms.

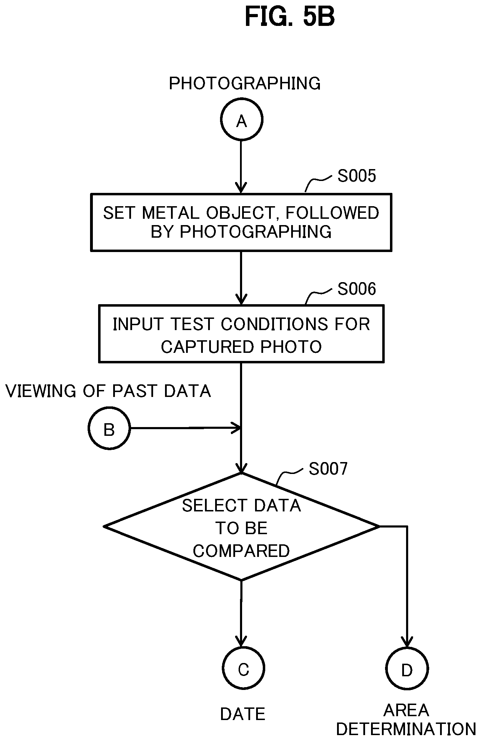

Returning to FIG. 5A, the description will be continued. The image comparison system 300 waits for selection of an operation by the operator (Step S003), and when the operation button 511 for executing photographing is selected, the process proceeds to Step S005 in FIG. 5B.

In Step S005, the operator sets the metal piece OB on a dedicated base FD, and the imaging module 200 captures a visible light image and a polarization image. Further, the operator may slide the base FD to capture the visible light image and the polarization image individually.

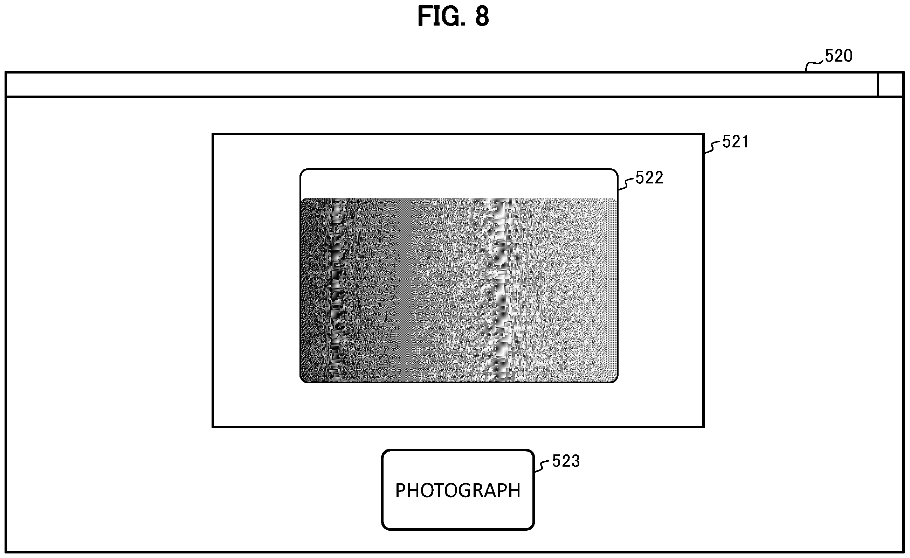

FIG. 8 is a display screen showing a surface state image of a metal piece to be imaged (Step S005). As shown in FIG. 8, a surface state image of the metal piece 522 is displayed in the region 521 on the display screen 520 of the image comparison system 300. The display screen 520 is provided with a photographing button 523, and when the operator presses the photographing button 523, the surface state image of the metal piece 522 is captured.

FIG. 9 is an input screen for inputting test conditions for the surface state image of the metal piece (Step S006). Surface state images of the metal piece 522 are displayed in regions 531 and 536 on the input screen 530. The operator inputs test contents on the input screen 542.

The visible light image 532 of the metal piece 522 is displayed in the region 531. The region 531 is provided with a switch 533; when the switch 533 is turned ON, the visible light image 532 is divided into five areas 534, A to E, and displayed. The size of the visible light image 532 is, for example, 10 × 20 [mm].

The polarization image 537 of the metal piece 522 is displayed in the region 536. Similarly, a switch 538 is provided in the region 536; when the switch 538 is turned ON, the polarization image 537 is divided into five areas 539, A to E, and displayed. The polarization image 537 has the same size as the visible light image 532, and the regions 534 and 539 are extracted and displayed in the region 541.

The five areas 534 and 539 are displayed with frame lines between 25 [mm] and 35 [mm] from the bottom of the metal piece 522.

The line 535 moves right and left on the visible light image 532 by mouse operation of the operator. The line 535 displays the distance from the left end of the visible light image 532 or the distance from the end of the metal piece OB in the visible light image 532 and the current density at that position on the scale 540.

In this case, the current density display module 118 acquires position information from the end of the image or the end of the metal piece OB in the image in the visible light image 532 or the polarization image 537, and displays the current density (A/dm²) in the acquired position information on the scale 540.

FIGS. 10A and 10B are explanatory diagrams showing input items on the input screen. FIG. 10A shows the upper half of the input items on the input screen, and FIG. 10B shows the lower half of the input items on the input screen (Step S006).

In the photographing conditions 550 of the input screen 542 shown in FIG. 10A, items such as the photographing date, day of the week, weather, temperature ([°C]), humidity ([%]), and others are described. The operator enters, for example, May 11, 2020, Tuesday as the date on which the metal piece 522 was photographed, the weather is sunny, the temperature is 25 [°C], the humidity is 60 [%], and the like.

In the Hull cell conditions 551 of the input screen 542, the operator inputs the type of plating, total current ([A]), test time ([min]), temperature ([°C]), agitation, operator, image taker, and the like for which the Hull cell test was performed. For example, the operator inputs the type of plating as Ni (watts), total current as 5 [A], test time as 5 [min], temperature as 50 [°C], no agitation, operator and image taker as XYZ, and the like.

As a result, for example, the extraction module 114 extracts from the storage module 120 an other surface state image whose test conditions matches at least partially with the Hull cell condition 551, namely the type of plating, total current ([A]), test time ([min]), temperature ([°C]), agitation, operator, and image taker.

In the pass/fail item 552 of the input screen 542, the operator inputs the pass/fail of the test result using the pull-down button. For example, the operator inputs "Pass."

The operator enters the overall state of the metal piece 522 in the overall item 553 of the input screen 542, and inputs, for example, whether it is acceptable or unacceptable, whether there is gloss, whether there is color tone, and the like. In addition, as problems, scorching, cloudiness, pitting, color tone, others, and the like are inputted. Further, as the cause of the defect, the operator inputs the concentration of the additive, the bath composition, the mixing of impurities, others, and the like for the plating solution. In addition, the operator inputs poor degreasing, poor acid cleaning, poor water washing, others, and the like for the pretreatment as the cause of the defect. Regarding the post-treatment as the cause of the defect, the operator inputs poor water washing, poor drying, others, and the like. The input in the overall item 553 is input in a format of ticking a check box.

In the area-specific item 554 of the input screen 542 in FIG. 10B, the operator inputs the current density range (ASD = A/dm²), features, pass/fail, and the like for each of the individual five areas 534, A to E, in FIG. 9. Regarding the current density, when the switch 533 of the visible light image 532 is turned ON, the current density may be automatically calculated and automatically inputted to each of the areas A to E.

The appearance area division module 117 divides the surface of the metal piece 522 into five areas (a plurality of areas), and accepts a determination of the test result in each of the divided five areas.

For example, for A, the current density range (ASD) is automatically inputted as 30-18, and the operator inputs "Scorches" using the pull-down. For B, the current density range (ASD) is automatically inputted as 18-9, and the operator inputs "Gloss" using the pull-down. For C, the current density range (ASD) is automatically inputted as 9-5, and the operator inputs "Pitting" using the pull-down. For D, the current density range (ASD) is automatically inputted as 5-1.8, and the operator inputs "Cloudiness" using the pull-down. For E, the current density range (ASD) is automatically inputted as 1.8-0.2, and the operator inputs "No Significant Characteristics" using the pull-down. For each of the areas A to E, the operator inputs pass/fail using the pull-down.

In the input field 555a for the countermeasure method of the input screen 542, the operator inputs the countermeasure method, the result of performing the method, and the like. In addition, when the operator presses the button 555b, a Hull cell technology set is displayed in a referable manner, in which Hull cell technologies are accumulated.

In the input field 556 for the countermeasure result of the input screen 542, when a defect occurs in the Hull cell test, the operator inputs a comment. In addition, when the operator presses the button 558, the operator can add a product photograph when the defect occurs, a photograph of the metal piece OB after the countermeasure, and the like.

When a specific result is obtained, the operator inputs a comment in the remarks entry 557 of the input screen 542. When the operator presses the button 559, surface state images captured in the past are displayed comparatively. In this case, the surface state images are displayed according to items set by the operator, such as acceptable examples (standards), unacceptable examples, threshold examples, cautions, and others.

Returning to FIG. 5B, the description will be continued. When the input of the test conditions of the captured photograph is completed in Step S006, the process proceeds to Step S007, and the process waits for selection of data to be compared. Even when the viewing of past data is selected in Step S003 in FIG. 5A, the process moves to Step S007.

FIG. 11 is a display screen showing priority items when performing data comparison of surface state images (Step S007). A selection button 568 for selecting a type of plating and item selection buttons 561 to 566 for selecting a priority item are displayed on the display screen 560 of the image comparison system 300.

The selection button 568 is a button (input field) for selecting the type of plating using the pull-down. In the present embodiment, Cu (copper sulfate) is selected by the pull-down as the type of plating.

The item selection buttons 561 to 566 indicate a plurality of criterion items different from the test conditions. The extraction module 114 can accept selection of one item from the plurality of items by the item selection buttons 561 to 566, and preferentially extract a corresponding other surface state image.

The item selection button 561 extracts an other surface state image by date. The item selection button 562 extracts an other surface state image by day of the week. The item selection button 563 extracts an other surface state image by area determination. The item selection button 564 extracts only the captured image determined to be acceptable as an other surface state image. The item selection button 565 extracts an other surface state image by type of defect. The item selection button 566 extracts an other surface state image based on other conditions.

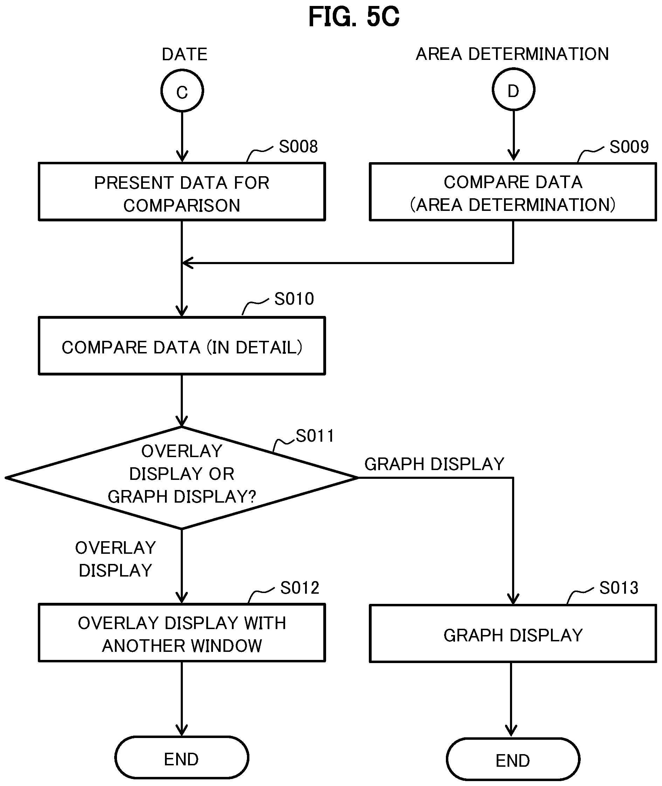

Returning to FIG. 5B, the description will be continued. When the date is selected by the item selection button 561, the image comparison system 300 proceeds to Step S008 in FIG. 5C and displays an other surface state image.

FIG. 12 is a display screen in which other surface state images are extracted on the right side in order from newest to oldest date (Step S008). On the display screen 570, about 6 to 10 surface state images (captured images) are displayed as past imaging results on the right side.

In the region 571 shown in FIG. 12, the newly acquired visible light image 532 captured by the imaging module 200 is displayed. A visible light image 572a is displayed in the region 572. Further, a surface state image 573a is displayed in the region 573. In the regions 572 and 573, for example, a preset surface state image is displayed when the type of plating is "Cu (Copper Sulfate)."

The surface state images preset by the operator are displayed in the regions 572 and 573, and for example, the set surface state image is displayed every time for each type of plating. Therefore, since the same surface state image is displayed every time in the regions 572 and 573 when the "Type of Plating" is "Cu (Copper Sulfate)," for example, the display fixed image may be indicated by coloring the entry of the photographing date.

As described above, the visible light image 572a set to be displayed every time for each "Type of Plating" is displayed in the region 572, and for example, a standard photograph immediately after bath preparation is displayed as the visible light image 572a. Further, in the region 573, the surface state image 573a preset by the operator for each "Type of Plating" is displayed every time as a reference for comparison, and for example, a captured image serving as a threshold value for pass/fail determination or a captured image with a poor test result is displayed as the surface state image 573a.

In the region 580, the surface state image 580a captured last time is displayed as the newest date. The surface state image 581a captured last but one time is displayed in the region 581. In the regions 582 and 583, surface state images 582a and 583a to be noted when a defect occurs are displayed. Further, in the regions 584 and 585, surface state images 584a and 585a showing unacceptable examples when a defect occurs are displayed.

The priority order displayed on the display screen 570 can be set as desired by manually selecting "Manual" in the setting button 586, and is displayed in the priority order set by the operator. As the priority order, for example, the newest date order, photographs of recorded specific conditions, photographs before and after bath preparation, photographs when a defect occurs, photographs before and after that, and the like can be set. Further, by selecting "Automatic," artificial intelligence (AI) automatically extracts a captured image similar to the visible light image 532 newly acquired this time.

Returning to FIG. 5B, the description will be continued. When data comparison by area determination is selected by the item selection button 563 in Step S007, the image comparison system 300 proceeds to Step S009 in FIG. 5C and displays an other surface state image.

FIG. 13 is a display screen in which other surface state images corresponding to five regions are extracted (Step S009). As shown in FIG. 13, the visible light image 532 and the polarization image 537 showing the newly acquired surface state image are displayed on the left side of the display screen 590, and the surface state images 680 to 688 that match the five regions 534 and 539 are displayed on the right side.

In the area setting 591, it is possible to set a matching area from among the five regions 534 and 539, and the number of passes/fails, the number of defects, and the number of features are extracted according to the determination content. Visible light images of the other surface state images 680 to 688 are displayed in the regions 600 to 608, and when the polarization image 537 is selected, the other surface state images 680 to 688 displayed in the regions 600 to 608 are switched from the visible light images to the polarization images. When the visible light image 532 is selected, the corresponding visible light images are displayed in the regions 600 to 608.

Returning to FIG. 5C, the description will be continued. When an other surface state image is selected in Step S008 (FIG. 12) or S009 (FIG. 13), the image comparison system 300 directly compares the newly acquired surface state image and the selected other surface state image (Step S010).

FIG. 14 is a display screen in which the visible light image 532 displayed in the region 571 and the visible light image 572a displayed in the region 572 are compared (Step S010). The visible light image 572a is an other surface state image captured in the past and selected by the operator.

As shown in FIG. 14, the image comparison system 300 contrasts the visible light image 532 and the visible light image 572a, and comparatively displays the input screen 542 of the visible light image 532 and the input screen 611 of the visible light image 572a.

Further, the detailed information extraction module 116a extracts from the storage module 120 each piece of information on the surface state of the metal piece, the test conditions, the countermeasure method, the countermeasure result, and the remarks entry for each of the visible light image 572a and the visible light image 532. As a result, the display control module 115 can display each piece of information on the surface state of the metal piece, the test conditions, the countermeasure method, the countermeasure result, and the remarks entry extracted by the detailed information extraction module 116a on the display screen 610 of the display module 160.

Note that some of the other surface state images 680 to 683 that are not selected by the operator are displayed on the right side of the display screen 610. Further, a superimposed display button 612 and graph display buttons 613 and 614 are provided on the display screen 610.

Returning to FIG. 5C, the description will be continued. In Step S011, when the superimposed display button 612 is selected (overlay display in Step S011), the image comparison system 300 proceeds to Step S012 and superimposes and displays the visible light image 532 and the visible light image 572a. On the other hand, when the graph display buttons 613 and 614 are selected (graph display in Step S011), the image comparison system 300 displays a graph indicating the degree of the surface of the region 571 or the region 572 (Step S013).

FIG. 15 is a display screen showing a superimposed display of the visible light image 532 and the visible light image 572a (Step S012). The image comparison system 300 changes either the visible light image 532 displayed in the region 571 or the visible light image 572a displayed in the region 572 to a transmission image, and superimposes and displays the image in a translucent state.

For example, the transmission image generation module 119 changes the visible light image 572a to a transmission image, so that the display control module 115 overlays and displays the transmitted visible light image 572a and the visible light image 532. Note that the display control module 115 may directly superimpose and display the visible light image 572a without changing the visible light image 572a to a transmission image.

The display screen 620 includes display mode change buttons 631 to 633. The display mode change buttons 631 to 633 can change the types of the surface state image in the region 571 and the surface state image in the region 572 and superimpose and display the images. For example, the display mode change button 631 superimposes and displays the surface state image in the region 571 and the surface state image in the region 572 as optical images indicating visible light images. The display mode change button 632 changes the surface state image in the region 571 and the surface state image in the region 572 to polarization images and superimposes and displays the images. The display mode change button 633 changes the surface state image in the region 571 to an optical image and the surface state image in the region 572 to a polarization image, and superimposes and displays the images.

FIG. 16 is a display screen showing a graph indicating the degree of surface unevenness in the polarization image (Step S013). In FIG. 16, a graph 621 is displayed on the display screen 630.

For example, the unevenness degree analysis module 115a analyzes the degree of unevenness on the surface of the metal piece OB based on the distance from the end of the polarization image 537, and causes the display screen 630 to display the graph 621. The graph 621 is a graph obtained by measuring the density of the color, the degree of RGB, the number of particles, and the like in the polarization image 537. The display screen 630 can determine the unevenness of the surface, which is difficult to determine from the normal visible light image 532, by displaying the graph 621. In particular, since the polarization image can detect a situation different from the appearance with respect to the surface of the metal piece OB, it is possible to make a more accurate judgment.

The number of particles may be input by being visually counted, or may be automatically determined. The horizontal axis of the graph 621 can be selected from three: the area of the five regions 534 and 539, the distance from the left end of each captured image, or the current density. As a result, the graph 621 can mutually switch the horizontal axis from the distance from the end of the polarization image 537 or the end of the metal piece OB, or the current density (A/dm²) by selection of the operator. The horizontal axis and the vertical axis of the graph 621 are examples, and are not limited thereto.

In the present embodiment, when the image comparison system 300 performs the superimposed display (overlay display) in Step S012 in FIG. 5C or the graph display in Step S011, the image comparison system 300 completes the process in FIGS. 5A to 5C.

### <Past Data Calling Processing by Date of Calendar (Option)>

On the display screen 610 in FIG. 14 and the display screen 630 in FIG. 16, a calendar display button 615 is provided which, as an option, executes processing of calling past data from the date of the calendar.

FIG. 17 is a display screen in which past data is called and the presence or absence of other surface state images is displayed on a calendar (Step S031). As shown in FIG. 17, the dates on which other surface state images are accumulated are visually displayed with frame lines on the calendar 640.

The extraction module 114 extracts an other surface state image whose test conditions match at least partially with the test conditions of the newly acquired surface state image, based on the imaging date on which the other surface state image is captured. The date call module 115b displays the presence or absence of other surface state images based on the imaging date extracted by the extraction module 114 on the calendar 640.

Thus, when the date is selected on which the other surface state image displayed on the calendar is present, the date call module 115b can cause the display module 160 to display the other surface state image captured on the selected date.

### <Change of Registration Information>

When the operation button 513 for executing the change of registration information is selected on the screen 510 showing the cover page in FIG. 7 (change of registration information in Step S003 in FIG. 5A), the process proceeds to Step S101.

In Step S101, for example, the input screen 530 shown in FIG. 9 is displayed. The operator can correct or change the content of the data captured in the past on the input screen 530. Specifically, the test conditions inputted on the input screen 542 shown in FIGS. 10A and 10B can be changed (or corrected). Further, the image comparison system 300 can change the registration information.

For example, on the input screen 542 shown in FIGS. 10A and 10B, not only the photographing conditions 550 and the Hull cell conditions 551 can be changed or corrected, but also the items to be entered can be added in the overall item 553 and the area-specific item 554. By adding items to be selected in the overall item 553 and items to be selected in the area-specific item 554, the image comparison system 300 can reflect the test results in detail, and can update the registered information. When the image comparison system 300 inputs information on the input screen 542, the image comparison system 300 completes the process.

### <Term Definition Setting>

When the operation button 514 for executing term definition is selected on the screen 510 showing the cover page in FIG. 7 (term definition in Step S003 in FIG. 5A), the process proceeds to Step S201.

In Step S201, a term definition table is displayed, and for example, how to express (expression method) the state of the surface is defined for each type of plating.

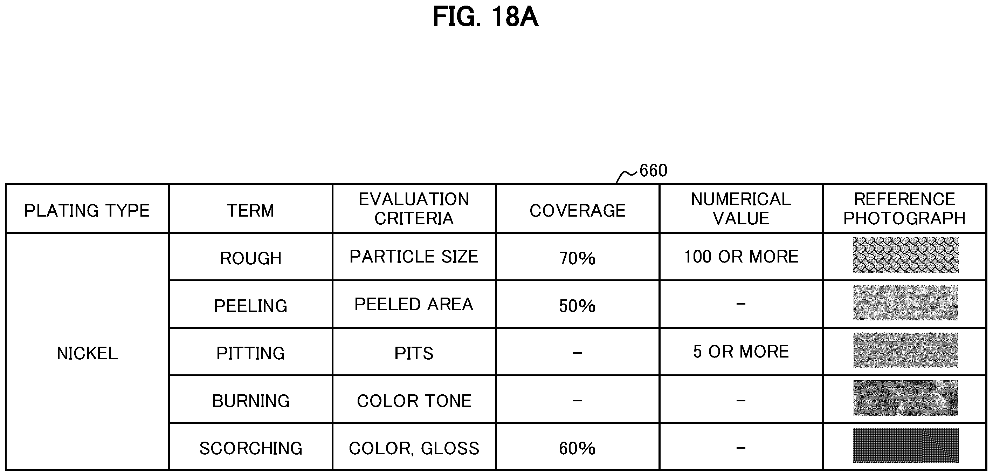

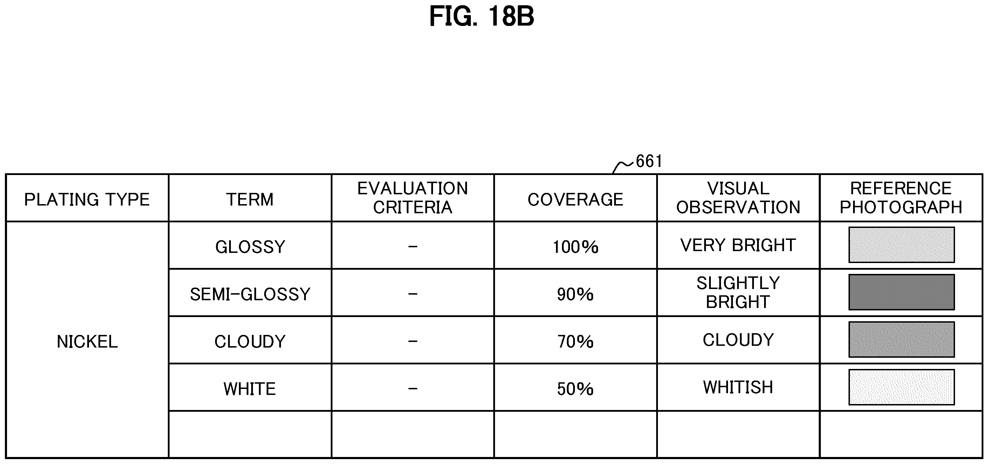

FIG. 18A defines terms for the surface roughness when nickel is used. Further, FIG. 18B defines terms for the color and gloss when nickel is used.

In the term definition table 660 in FIG. 18A, columns for the type of plating, term, evaluation criterion, coverage, numerical value, and reference photograph are provided. When nickel is used as the type of plating, for example, when the term "Rough" is used, the evaluation criterion is determined in terms of the particle size by the state where particles having a diameter of 1 [mm] or more cover 70 [%] of the entire area (for example, 10 × 20 [mm²]), or the state where there are 100 or more particles in the entire area is defined. Further, by attaching a reference photograph corresponding to "Rough," it becomes easy for the operator to imagine the state of the expression "Rough."

Note that this expression is an example, and the present invention is not limited to this. In addition, the numerical value is set to an initial value, and the operator may input a numerical value by visual observation or automatic determination based on the operator's own judgment. When the operator selects a reference photograph, other photographs related to the expression "Rough" may be displayed.

When the term "Peeling" is used, the evaluation criterion is determined by the peeled area, and is defined as the state where 50 [%] or more of the area is peeled off. Further, by attaching a reference photograph corresponding to "Peeling," it becomes easy for the operator to imagine the state of the expression "Peeling."

When the term "Pitting" is used, the evaluation criterion is defined as the state where five or more pits indicating macroscopic holes or depressions are included. Further, by attaching a reference photograph corresponding to "Pitting," it becomes easy for the operator to imagine the state of the expression "Pitting."

When the term "Burning" is used, the evaluation criterion is determined by the color tone. In this case, the operator refers to the reference photograph and determines whether or not the color tone is the same as or similar to the reference photograph.

When the term "Scorching" is used, the evaluation criterion is determined by color or gloss. When the operator refers to the reference photograph, the operator determines that the surface is "Scorching" if 60 [%] or more of the surface is covered with scorching.

In the term definition table 661 in FIG. 18B, columns for the type of plating, term, evaluation criterion, coverage, visual observation, and reference photograph are provided. When nickel is used as the type of plating, for example, when the term "Glossy" is used, it is defined that the coverage is 100 [%] and the surface is very bright by visual observation. In addition, by attaching a reference photograph corresponding to "Glossy," it becomes easy for the operator to imagine the state of the expression "Glossy."

Note that this expression is an example, and the present invention is not limited to this. When the operator selects a reference photograph, other photographs related to the expression "Glossy" may be displayed.

When the term "Semi-Glossy" is used, the evaluation criterion is defined that the coverage is 90 [%] and the surface is slightly bright by visual observation. In addition, by attaching a reference photograph corresponding to "Semi-Glossy," it becomes easy for the operator to imagine the state of the expression "Semi-Glossy."

When the term "Cloudy" is used, the evaluation criterion is defined that the coverage is 70 [%] and the surface is in a state where "Fog" is applied in visual observation. In addition, by attaching a reference photograph corresponding to "Cloudy," it becomes easy for the operator to imagine the state of the expression "Cloudy. "

When the term "White" is used, the evaluation criterion is defined that the coverage is 50 [%] and the surface is whitish in visual observation. In addition, by attaching a reference photograph corresponding to "White," it becomes easy for the operator to imagine the state of the expression "White." When the input or reference of the definition of the term is completed, the process is completed.

As described above, the image comparison system 300 includes the acquisition module 111, the condition acquisition module 113, the extraction module 114, and the display control module 115. The acquisition module 111 acquires the surface state image of the metal piece OB indicating the result of the plating test. The extraction module 114 extracts from the storage module 120 an other surface state image whose test conditions match at least partially with test conditions of the newly acquired surface state image. The display control module 115 causes the display module 160 to comparatively display the newly acquired surface state image and the other surface state image extracted by the extraction module 114.

According to such a configuration, the image comparison system 300 can extract an other surface state image whose test conditions match at least partially with test conditions of the newly acquired surface state image by the extraction module 114, and can comparatively display the newly acquired surface state image of the metal piece OB and the other surface state image extracted by the extraction module 114. Some of the test conditions correspond to, for example, the Hull cell conditions 551 of the Hull cell test. Therefore, since it is possible to extract a surface state image having the same test conditions such as the type of plating and the test time, information that can be used as a judgment material for the test results of the plating test can be easily provided to the operator.

Further, the image comparison system 300 further includes a detailed display reception module 116 that, when the extraction module 114 extracts a plurality of other surface state images, receives a detailed display instruction for the state of any one of the plurality of other surface state images extracted by the extraction module 114, and the display control module 115 causes the display module to comparatively display the newly acquired surface state image and the other surface state images based on the received detailed display instruction.

According to such a configuration, when a plurality of other surface state images are extracted by the extraction module 114, the detailed display reception module 116 receives one detailed display instruction for an other surface state image that an operator wants to compare with the newly acquired surface state image. The operator can comparatively display the newly acquired surface state image and the other surface state image only by selecting one other surface state image to be compared. As a result, the image comparison system 300 can easily compare the newly acquired surface state image and the selected other surface state image.

In the image comparison system 300, detailed information including at least one of the surface state of the metal piece OB, the test conditions, the countermeasure method, the countermeasure result, and the remarks entry is associated with each of the other surface state images and the newly acquired surface state image in the storage module 120, and the image comparison system 300 further includes the detailed information extraction module 116a that extracts the detailed information from the storage module 120 for each of the other surface state images and the newly acquired surface state image. The display control module 115 causes the display module 160 to comparatively display the detailed information of the other surface state images and the detailed information of the newly acquired surface state image extracted by the detailed information extraction module 116a.

According to such a configuration, the image comparison system 300 can extract detailed information from the storage module 120 for each of the other surface state images and the newly acquired surface state image by the detailed information extraction module 116a, and can display detailed information including at least one of the surface state of the metal piece OB, the test conditions, the countermeasure method, the countermeasure result, and the remarks entry for each of the other surface state images and the newly acquired surface state image on the display module 160. As a result, the image comparison system 300 can easily compare the detailed information of the other surface state images and the newly acquired surface state image.

The image comparison system 300 includes the visible light camera 201 that captures an image with visible light and the polarization camera 202 that captures an image with predetermined polarized light. The visible light camera 201 and the polarization camera 202 capture the surface state of the metal piece OB to acquire the new surface state image.

According to such a configuration, the image comparison system 300 acquires the visible light image 532 from the visible light camera 201 and acquires the polarization image 537 from the polarization camera 202. As a result, the image comparison system 300 can display the visible light image 532 and the polarization image 537 for the surface state image. Therefore, the operator can check the test results by displaying the visible light image 532 and the polarization image 537 for the surface state image.

In the image comparison system 300, the display control module 115 causes the display module 160 to display the visible light image 532 captured by the visible light camera 201 and/or the polarization image 537 captured by the polarization camera 202, each of which is the new surface state image. In the image comparison system 300, when either the visible light image 532 or the polarization image 537, each of which is the new surface state image, is selected, the display control module 115 causes the display module 160 to display the corresponding one of the visible light image and the polarization image, which are the other surface state images.

According to such a configuration, the image comparison system 300 can display the visible light image 532 and the polarization image 537 on the display screen 590 by the display control module 115, and when either the visible light image 532 or the polarization image 537 is selected, the image comparison system 300 displays the corresponding image of the visible light image and the polarization image, which are the other surface state images. As a result, the operator can easily refer to the corresponding one of the visible light image and the polarization image, which are the other surface state images, for the test result.

The image comparison system 300 further includes the unevenness degree analysis module 115a in the display control module 115 that analyzes the degree of unevenness on the surface of the metal piece OB based on the distance from the end of the polarization image or the end of the metal piece OB and displays the degree of unevenness on the display module 160.

According to such a configuration, the image comparison system 300 can analyze the degree of unevenness on the surface of the metal piece OB using the polarization image by the unevenness degree analysis module 115a. As a result, the image comparison system 300 can visualize the state of the surface of the metal piece OB, which cannot be determined visually, by graphing or quantifying by the unevenness degree analysis module 115a.

The plating test of the image comparison system 300 can be a Hull cell test.

According to such a configuration, the image comparison system 300 can display a gradation in a continuous current density range on the metal piece OB as the surface state image. As a result, the image comparison system 300 can obtain various pieces of evaluation information such as determination of an optimal current density range, composition balance of the plating bath, excess or deficiency of brightener and additive, covering power, mixing state of impurities, and effect verification of removal in the Hull cell test, and can be used for evaluation of the plating solution, management of the plating solution, development of a new plating bath, and the like.

Further, the image comparison system 300 further includes the appearance area division module 117 that divides the surface of the metal piece OB into a plurality of areas (A to E), and the appearance area division module 117 accepts a determination of whether or not the test result is acceptable in each of the areas (A to E) divided into the plurality of areas.

According to such a configuration, the image comparison system 300 divides the surface of the metal piece OB by the appearance area division module 117, and the operator can input a determination of whether or not the test result is acceptable for each divided area. As a result, the image comparison system 300 can compare the other surface state image and the test result for each area divided by the appearance area division module 117.

The image comparison system 300 further includes the current density display module 118 that acquires position information from the end of the image or the end of the metal piece OB in the image in the newly acquired surface state image or the other surface state image, and displays the current density in the acquired position information on the display module 160.

According to such a configuration, the image comparison system 300 causes the display module 160 to display the current density in the position information only by the operator designating a position on the surface state image with the mouse by the current density display module 118. As a result, the operator can analyze the surface state image by referring to the current density of the current density display module 118. Specifically, even if the state of the surface state image is the same, the influence of the additive, the balance of the plating bath, and the like can be determined by the difference in current density.

In the image comparison system 300, the extraction module 114 has a plurality of criterion items different from the test conditions, accepts selection of one item from the plurality of items, and preferentially extracts a corresponding other surface state image.

According to such a configuration, the image comparison system 300 can set the priority item by the extraction module 114 and extract the surface state image corresponding to the priority item. In this case, the image comparison system 300 can set, for example, the date, day of the week, area determination, and the like shown in FIG. 3 as the priority item. As a result, since the image comparison system 300 can extract an other surface state image that the operator wants to view by the priority item, the image comparison system 300 can easily display an other surface state image that the operator wants to view.

The image comparison system 300 extracts an other surface state image whose test conditions match at least partially with the test conditions of the newly acquired surface state image, based on the imaging date on which the other surface state image is captured by the extraction module 114. The display control module 115 further includes the date call module 115b in the display control module 115 that displays on a calendar the presence or absence of other surface state images based on the imaging date extracted by the extraction module 114. When the date is selected on which the other surface state image displayed on the calendar is present, the date call module 115b causes the display module 160 to display the other surface state image captured on the selected date.

According to such a configuration, the image comparison system 300 can display, on the calendar 640 by the date call module 115b, the imaging date on which an other surface state image whose test conditions match at least partially with test conditions is captured. As a result, since the image comparison system 300 can display the presence or absence of other surface state images on the calendar 640, when searching for other surface state images, the image comparison system 300 can search from the schedule of the calendar. In this case, for example, a Hull cell test is likely to fail after a long vacation during which manufacturing equipment is stopped for a long period of time. Therefore, the operator can easily select an other surface state image that may be rejected from the calendar 640 in consideration of the time interval.

In the image comparison system 300, the display control module 115 superimposes and displays any one of the other surface state image extracted by the extraction module 114 and the newly acquired surface state image.

According to such a configuration, the image comparison system 300 can superimpose and display captured images to be compared, regardless of whether they are visible light images or changed images, by the display control module 115. As a result, the image comparison system 300 can determine the test result in detail in a state where the captured images to be compared are superimposed and displayed.

Further, the image comparison system 300 further includes the transmission image generation module 119 that transmits an image of either one of the other surface state image and the newly acquired surface state image when superimposing and displaying the images.

According to such a configuration, the image comparison system 300 can perform superimposed display by overlaying the transmitted one captured image and the other captured image by the transmission image generation module 119. As a result, since the operator can check the superimposed display using the transmitted captured image, the operator can easily detect a subtle difference that is difficult to determine by contrast observation.

Note that the present invention is not limited to the above-described embodiment, and modifications can be made without departing from the spirit of the present invention.

### Reference Signs List

- 100: information processing device
- 111: acquisition module
- 112: registration module
- 113: condition acquisition module
- 114: extraction module
- 115: display control module
- 115a: unevenness degree analysis module
- 115b: date call module
- 116: detailed display reception module
- 116a: detailed information extraction module
- 117: appearance area division module
- 118: current density display module
- 119: transmission image generation module
- 200: imaging module
- 201: visible light camera
- 202: polarization camera
- 300: image comparison system
- 400: Hull cell test (plating apparatus)

## Claims

1. An image comparison system comprising:
an acquisition module that acquires a surface state image of a metal piece indicating a result of a plating test;
a condition acquisition module that acquires a test condition of the plating test for the surface state image that has been newly acquired;
a storage module that stores the surface state image and the test condition;
an extraction module that extracts from the storage module an other surface state image whose test conditions match at least partially with test conditions of the newly acquired surface state image; and
a display control module that causes a display module to comparatively display the newly acquired surface state image and the other surface state image extracted by the extraction module.

2. The image comparison system according to claim 1, further comprising:
a detailed display reception module that, when the extraction module extracts a plurality of other surface state images, receives a detailed display instruction for a state of any one of the plurality of other surface state images extracted by the extraction module, wherein
the display control module causes the display module to comparatively display the newly acquired surface state image and the other surface state images based on the received detailed display instruction.

3. The image comparison system according to claim 1 or 2, wherein
detailed information including at least one of a state of a surface of the metal piece, the test condition, a countermeasure method, a countermeasure result, and a remarks entry is associated with and stored for each of the other surface state images and the newly acquired surface state image in the storage module, the image comparison system further comprising:
a detailed information extraction module that extracts the detailed information from the storage module for each of the other surface state images and the newly acquired surface state image, wherein
the display control module causes the display module to comparatively display the detailed information of the other surface state images and the detailed information of the newly acquired surface state image extracted by the detailed information extraction module.

4. The image comparison system according to claim 1 or 2, comprising:
a visible light camera that captures an image with visible light; and
a polarization camera that captures an image with predetermined polarized light, wherein
the visible light camera and the polarization camera capture the state of the surface of the metal piece to acquire the new surface state image.

5. The image comparison system according to claim 4, wherein
the display control module causes the display module to display a visible light image captured by the visible light camera and/or a polarization image captured by the polarization camera, each of which is the new surface state image, and
when either the visible light image or the polarization image, each of which is the new surface state image, is selected, the display control module causes the display module to display a corresponding one of a visible light image and a polarization image, which are the other surface state images.

6. The image comparison system according to claim 5, wherein
the display control module further includes an unevenness degree analysis module that analyzes a degree of unevenness on the surface of the metal piece based on a distance from an end of the polarization image or an end of the metal piece, and causes the display module to display the degree of unevenness.

7. The image comparison system according to claim 1, wherein
the plating test is a Hull cell test.

8. The image comparison system according to claim 7, further comprising:
an appearance area division module that divides the surface of the metal piece into a plurality of areas, wherein
the appearance area division module accepts a determination of whether or not the test result is acceptable in each of the plurality of divided areas.

9. The image comparison system according to claim 7, further comprising:
a current density display module that acquires position information from an end of an image or an end of the metal piece in the image in the newly acquired surface state image or the other surface state image, and causes the display module to display a current density in the acquired position information.

10. The image comparison system according to claim 1, wherein
the extraction module has a plurality of criterion items different from the test condition, receives selection of one priority item from the plurality of items, and preferentially extracts a corresponding other surface state image.

11. The image comparison system according to claim 1, wherein
the extraction module extracts the other surface state image whose test conditions match at least partially with the test conditions of the newly acquired surface state image, based on an imaging date on which the other surface state image is captured,
the display control module further includes a date call module that displays on a calendar presence or absence of the other surface state image based on the imaging date extracted by the extraction module, and
when a date is selected on which the other surface state image displayed on the calendar is present, the date call module causes the display module to display the other surface state image captured on the selected date.

12. The image comparison system according to claim 1, wherein
the display control module superimposes and displays any one of the other surface state image extracted by the extraction module and the newly acquired surface state image.

13. The image comparison system according to claim 12, further comprising:
a transmission image generation module that transmits an image of either one of the other surface state image and the newly acquired surface state image.

14. An image comparison method comprising the steps of:
acquiring, by an acquisition module, a surface state image of a metal piece indicating a result of a plating test;
acquiring, by a condition acquisition module, a test condition of the plating test for the surface state image that has been newly acquired;
extracting, by an extraction module, from a storage module an other surface state image whose test conditions match at least partially with test conditions of the newly acquired surface state image; and
causing, by a display control module, a display module to comparatively display the newly acquired surface state image and the other surface state image.

15. An image comparison program that causes a computer to execute:
a procedure of acquiring a surface state image of a metal piece indicating a result of a plating test;
a procedure of acquiring a test condition of the plating test for the surface state image that has been newly acquired;
a procedure of extracting from a storage module an other surface state image whose test conditions match at least partially with test conditions of the newly acquired surface state image; and
a procedure of causing a display module to comparatively display the newly acquired surface state image and the other surface state image.
